# EUROPEAN PATENT SPECIFICATION

(11) **EP 1 275 778 B1**
(45) Date of publication and mention of the grant of the patent: **09.02.2011**
(21) Application number: 00918658.6
(22) Date of filing: 31.03.2000
(51) Int. Cl.: D21H 21/36, A01G 13/02, C08J 5/18, A01C 1/04, A01G 1/00, A01N 25/34, C09K 17/32

(54) **A MULTI-FUNCTIONAL PAPER AND A METHOD OF MAKING THE SAME**
MULTIFUNKTIONALES PAPIER UND VERFAHREN ZU SEINER HERSTELLUNG
MATIERE EN PAPIER POLYVALENTE ET SON PROCEDE DE FABRICATION

(43) Date of publication of application: 15.01.2003
(73) Proprietor: Yuen Foong Yu Paper MFG Company, Limited, Taipei, Taiwan (TW)
(72) Inventor: HUANG, Chingchung, Yunghe City, Taipei (CN)
(74) Representative: Behnisch, Werner
(86) International application number: PCT/CN2000/000071
(87) International publication number: WO 2001/079608

(56) References cited:
- EP-A- 0 568 027
- WO-A-00/67549
- WO-A-94/22287
- CN-A- 1 048 221
- CN-A- 1 054 429
- CN-A- 1 069 540
- CN-A- 1 088 225
- CN-A- 1 140 535
- CN-B- 86 101 146
- GB-A- 2 273 458
- GB-A- 2 328 600
- DATABASE EPODOC EUROPEAN PATENT OFFICE, THE HAGUE, NL; XP002195503 & TW 442 592 B (YUEN FOONG YU PAPER MFG CO LTD) 23 June 2001 (2001-06-23)

## Description

The present invention relates to a paper and the manufacturing method therefor, and more particularly to a multi-purpose functional agricultural mulching paper and the manufacturing method therefor.

Generally, the agricultural production comprises the steps of soil preparation, sowing, fertilization, hand weeding and harvest, each of which requires a huge amount of manpower. Particularly, the step of hand weeding is the most time-consuming process, which always delays the agricultural production for a period of time. To proceed the step of weed control, the farmer conventionally cover a plastic film over the land to retard the growth of weeds. However, after the crops are harvested, the farmer has no ideal in dealing with the useless plastic film. In addition, the plastic film can't be decomposed naturally so that it tends to result in environmental pollution and influence the ecological environment once the plastic film is discarded.

In the PCT publication No. WO 94/22287, a substrate for cultivation of plants, vegetables and the like is disclosed. The substrate is composed of a fibrous pulp material in the form of fluff and of a wrapping enclosing said fluff. The upper face of said wrapping is slit to produce cuts in which the plants, vegetables and the like may be inserted. The main purpose of the mentioned publication is to suggest a cultivation substrate being non-harmful to the consumers as well as the environment.

The paper product has the advantage of being decomposed in natural environment easily. After harvest, it can be naturally disintegrated and integrated as part of soil after plowing so that it would not cause any residual deleterious environmental impact as compared to those by traditional plastic film. Therefore, it is desired to develop an agricultural mulching paper to replace traditional plastic film, thereby improving the environmental pollution and increasing the economic benefits.

The paper is typically made of the organic wood fibers, which are also excellent carriers for microorganisms. However, conventional paper contains some chemical additives useless for agricultural planting. Thus the conventional paper is not suitable to be used in agricultural application.

It is therefore tried by the applicant to develop a multi-purpose functional agricultural mulching paper for applying in agricultural planting to solve the problems resulting from weed control, pest control, sowing, growing seedlings, fertilization, fertilizer saving and manpower saving, thereby increasing the economic benefits.

It is therefore an object of the present invention to provide a multi-purpose functional agricultural mulching paper and the manufacturing method therefor.

It is further an object of the present invention to provide a multi-purpose functional agricultural mulching paper for applying in agricultural planting to control weeds, control pests, sow seeds, grow seedlings, supply fertilizer, save fertilizer and save manpower.

It is still an object of the present invention to provide a biodegradable agricultural mulching paper. The biodegradable agricultural mulching paper of the present invention have excellent light-blocking ability and natural porous carriers, thereby allowing microorganisms to be coated thereon.

It is additional an object of the present invention to provide a method of manufacturing the multi-purpose functional agricultural mulching paper. The method comprises steps of (a) providing a papermaking material, (b) treating the papermaking material to form a cleaned paper pulp, and (c) adding at least one functional additive into the cleaned paper pulp and treating the cleaned paper pulp to form the multi-purpose agricultural mulching paper.

Preferably, the papermaking material is one selected from a group consisting of waste paper fibers, biodegradable plant fibers and polymer fibers.

In accordance with one aspect of the present invention, the step (b) comprises steps of classifying, pulp-dispersing, coarse pulp-clarifying, fiber-separation, coarse screening, fine pulp-clarifying, fine screening, heat-dispersion, bleaching, pulp-washing and pulp-refinning.

Preferably, the functional additive is one selected from a group consisting of Camellia seed cake, calcium carbonate, dry strength agent, wet strength agent, weed control agent, pest control agent and bacterial control agent.

Preferably, the Camellia seed cake is added into the cleaned paper pulp at 1% for controlling the propagation of golden apple snails and increasing dispersion level of the pulp fibers.

Preferably, the calcium carbonate is added into the cleaned paper pulp at a dosage based on the classification of the waste paper, sieving ratio of the fibers, desired water-absorbing ability and air permeability of the mulching paper for increasing the physical strength of the mulching paper and good for the multiplication of microorganisms.

Preferably, the weed control agent is various inorganic or organic filler selected from a group consisting of black carbon, silicon dioxide and titanium dioxide.

Preferably, the dry strength agent is one selected from a group consisting of melamine formaldehyde resin, polymeric amine-epichlorohydrin resin, phenolic resin, glyoxalated polyacrylamide resin, polyacrylamide resin, raw starch, modified starch, gelatine and various anionic or cationic acidic or neutral dry strength agent.

Preferably, the wet strength agent is one selected from a group consisting of melamine formaldehyde resin, polymeric amine-epichlorohydrin resin, phenolic resin, glyoxalated polyacrylamide resin and various anionic or cationic acidic or neutral wet strength agent.

Preferably, the multi-purpose functional agricultural mulching paper has a neutral pH value of about 6.

Preferably, the multi-purpose functional agricultural mulching paper has a basic weight ranged from 120 g/m² to 150 g/m² or above.

Preferably, the multi-purpose functional agricultural mulching paper has a thickness ranged from 0.2mm to 0.3mm.

Preferably, the multi-purpose functional agricultural mulching paper has a water-absorbing ability larger than Cobb, 1 Min, 20 gsm.

Preferably, the multi-purpose functional agricultural mulching paper has a wet-breaking strength in vertical/transverse lower than 1.0 kg/m² after two hours immersion.

Preferably, the multi-purpose functional agricultural mulching paper has an air permeability larger than a value of about 50 sec/100 cm³.

In accordance with another aspect of the present invention, the multi-purpose functional agricultural mulching paper has light-blocking weed control ability and natural porous carriers suitable for microorganisms to breed therein so that microorganisms for controlling diseases of the plants, pest control agent and bacterial control agent can be coated thereon.

Preferably, the microorganisms for controlling diseases of the plants are antagonistic to rice sheath blight or radish seeding blight. More preferably, the pest control agent is selected from a group consisting of sodium dodecyl sulfate (SDS), linear alkyl sulfate (LAS), agricultural waste containing saponin, and methyl alcohol extracted from Camellia seed cake, or tobacco dust powder.

Certainly, the microorganisms, pest control agent and bacterial control agent can be coated on the surface of the mulching paper by an adhesive material. Preferably, the adhesive material is one of natural amylum gel and carboxymethyl cellulose (CMC).

In accordance with another aspect of the present invention, the method further comprises a step of coating fertilizer powder or capsules on the mulching paper to form a slowly released organic or chemical fertilizer coating, thereby providing required nutrition for plants.

In accordance with another aspect of the present invention, the method further comprises a step of punching the mulching paper with plural holes, embossing the mulching paper with a pattern, and inlaying plural seeds in the punched holes to allow plural seeds to root downwardly when germination. Preferably, each of the punched holes slightly pierces through the fertilizer and microorganism coating and the mulching paper.

In accordance with another aspect of the present invention, the method further comprises a step of attaching a fixing layer on the mulching paper by an adhesive material for securing plural seeds on the mulching paper. Preferably, the adhering material is one selected from a group consisting of glue spray, starch and carboxymethyl cellulose (CMC).

In accordance with another aspect of the present invention, the method further comprises a step of treating the seeds by a chemical agent cooperating with one selected from a group consisting of algin soda acid, gelatine and polyvinyl alcohol for protecting the germination of seeds. Preferably, the chemical agent is selected from a group consisting of ethylene glycol, propylene glycol, butylene glycol, polyethylene glycol, polypropylene glycol, polybutylene glycol, glycerine and 2-octyl glycol.

Preferably, the seeds are covered by paper pulp or polymer compound. More preferably, the seeds are seeds of cereal, seeds of medicinal herbs, seeds of economical plant, seeds of greensward, seeds of vegetables, seeds of flower, seeds of fruit or artificial seeds cultivated by cell organization.

Certainly, the multi-purpose agricultural mulching paper can be embossed with a pattern and punched with plural holes entirely to increase the water-absorbing ability, air permeability and softness thereof and dimension stability in paper size under the condition of dry and wet alternation.

Certainly, the functional additive can be selectively added into the cleaned paper pulp according to the requirements of the plants.

Certainly, the multi-purpose agricultural mulching paper can be rolled up and cut into a specific modeling for use.

Certainly, the multi-purpose agricultural mulching paper of the present invention can be used in large area field, home garden, golf field, cultivating box, indoor planting system and organic farming for planting various crops.

It is more an object of the present invention to provide a multi-purpose agricultural mulching paper. The multi-purpose agricultural mulching paper contains at least one functional additive and has a neutral pH value.

Preferably, the functional additive is one selected from a group consisting of seeds of Camellia seed cake, calcium carbonate, extractives of Camellia seed cake powder, derivatives of Camellia seed cake powder, and a combination thereof.

Preferably, the multi-purpose agricultural mulching paper has light-blocking weed control ability and natural porous carriers suitable for microorganisms to breed therein so that microorganisms for controlling diseases of the plants, pest control agent and bacterial control agent can be coated thereon.

Preferably, the microorganisms for controlling diseases of the plants are antagonistic to rice sheath blight or radish seeding blight.

Preferably, the pest control agent is one selected from a group consisting of sodium dodecyl sulfate (SDS), linear alkyl sulfate (LAS), agricultural waste containing saponin and methyl alcohol extracted from Camellia seed cake, or tobacco dust powder.

Certainly, the microorganism, pest control agent and bacterial control agent can be coated on the surface of the mulching paper by an adhesive material. Preferably, the adhesive material is one of natural amylum gel and carboxymethyl cellulose (CMC).

Preferably, the mulching paper further comprises a slowly released organic or chemical fertilizer coating for providing required nutrition to plants and plural punched holes for allowing plural seeds to be inlaid therein. More preferably, the punched holes slightly pierces through the fertilizer and bacterial coating and mulching paper.

Preferably, the mulching paper further comprises a fixing layer attached on the surface thereof for fixing the seeds therein, wherein the fixing layer is attached on the surface by an adhesive material selected from a group consisting of spray glue, amylum and carboxymethyl cellulose (CMC).

The present invention may best be understood through the following descriptions with reference to the accompanying drawing, in which:

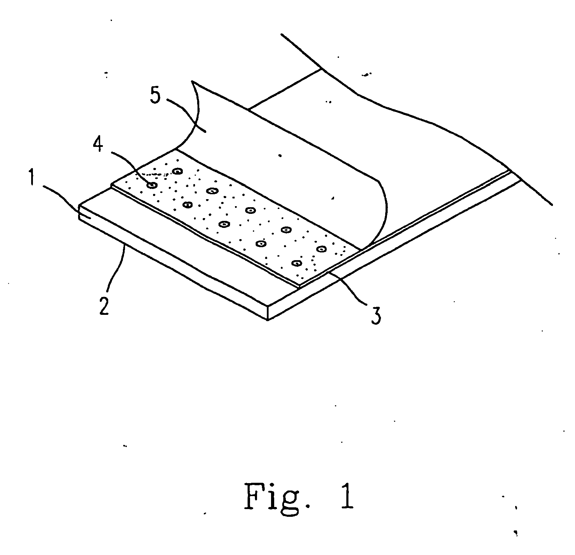

Fig. 1 is a schematic view showing a preferred multi-purpose agricultural mulching paper of the present invention.

The present invention shows a multi-purpose agricultural mulching paper for using in weed control, pest control, bacterial control, fertilizer supply and seed sowing. The mulching paper of the present invention is made of a papermaking material selected from the waste paper fibers, biodegradable plant fibers or polymer fibers.., etc. After the following papermaking process of pulp-dispersing, coarse pulp-clarifying, fiber-separation, coarse screening, fine pulp-clarifying, fine screening, heat-dispersion, bleaching, pulp-washing and pulp-refinning, the papermaking material becomes cleaned paper pulp and is fed to a papermaking machine to make the paper. Thereafter, the cleaned paper pulp is dehydrated by a pressing device of the papermaking machine, dried by a multicylinder dryer, and winding up to form a paper roll. The resulting paper roll is then winding up again, embossed with a pattern, punched with plural holes, inlaid with plural seeds, attached with a fixing layer, cut, and packed to form the multi-purpose agricultural mulching paper.

To meet the requirements of the multi-purpose agricultural mulching paper, various functional additives can be selectively added into the paper pulp during the papermaking process. These functional additives are preferably Camellia seed cake, calcium carbonate, dry strength agent, wet strength agent, weed control agent, pest control agent and bacteria control agent.., etc. Alternatively, these functional additives can be mixed with pulp slurry or sprayed, coated or immersed in the papermaking machine to allow the resulting mulching paper to meet the requirements of multi-purpose mulching paper.

If the multi-purpose agricultural mulching paper is applied in planting general crops, the wet strength agent is preferably one of the melamine formaldehyde resin, polymeric amine-epichlorohydrin resin, phenolic resin, glyoxalated polyacrylamide resin and various anionic or cationic acidic or neutral wet strength agent. In addition, the dry strength agent is preferably one of melamine formaldehyde resin, polymeric amine-epichlorohydrin resin, phenolic resin, glyoxalated polyacrylamide resin, polyacrylamide resin, raw starch, modified starch, gelatine and various anionic or cationic acidic or neutral dry strength agent.

With regard to weed control agent, various inorganic or organic packing material, such as black carbon, silicon dioxide and titanium dioxide, may be the best choice. In addition, pest control agent is preferably linear alkyl benzene sulfonate or Camellia seed cake. Preferably, a little amount of calcium carbonate can be selectively added into the mulching paper according to the classification of the waste paper, sieving ratio of the fibers and desired water-absorbing ability and air permeability of the mulching paper, thereby increasing the physical strength of the paper, encouraging the breed of microorganisms and reduce pest control agent contains. More preferably, 1% (weight percentage to the total weight) natural Camellia seed cake can be added into the mulching paper for controlling the propagation of golden apple snails and increasing dispersion level of the fibers.

The present invention can be described more detailed according to the following manufacturing process and experimental data.

Besides classifying the waste paper in advance, the papermaking process of the present invention further employs a manufacturing equipment, which is able to generate cleaned paper pulp with high concentration and adjust the ratio of short and long fibers automatically according to Canadian Standard Freeness (CSF) of the paper pulp, to improve the structure of the fibers dispersed in the mulching paper. Therefore, the physical strength of the mulching paper can be enhanced up to a level of being applied in paddy field without adding any chemicals. In addition, the papermaking process of the present invention uses Wedgewire to sieve the paper pulp step by step so that the paper pulp can be sieved at an increasing amount under small slot. Moreover, certain particles, which may influence the quality of resulting paper and are unfavorable to the papermaking process and harmful to health, can be removed thoroughly. Certainly, the papermaking process of the present invention can also employ a 5% high concentration pulp-milling system to steady the papermaking process and the quality of resulting paper. Due to the absence of chemicals, the following steps of adjusting the ratio of fibers on machine direction and cross direction, steadying transverse basic weight, reducing dry temperature, reducing water gradient on machine direction and cross direction, by specific oven and anti-pollution equipment must be employed to maintain the physical strength, water-absorbing ability and air permeability of the mulching paper.

To improve the quality of the mulching paper, the mulching paper can be designed to have a basis weight ranged from 120 glm² to 150 g/m² or above, thereby enhencing weed control ability and steadying other functions thereof. Preferably, the mulching paper has a thickness ranged from 0.2mm to 0.3mm. In addition, the water-absorbing ability of the mulching paper can be increased up to a level larger than Cobb, 1Min, 20 gsm to allow the mulching paper to be covered on the paddy field more easily. To allow the rice seedlings to be sowed into the mulching paper and soil by rice transplanter more smoothly, the mulching paper can be designed to have a wet-breaking force in machine direction/cross direction lower than 1.0 kg/cm² after two hours immersion. To meet the requirements for dry land corps, the mulching paper of the present invention can be embossed with a pattern to have a air permeability degree larger than a value of 50 sec/100 cm³ so as to increase water-permeating ability and steady the variation in paper dimension under the conditions of wet and dry alternation.

In addition, one important characteristic of the agricultural mulching paper is that the papermaking process doesn't add any side effect chemicals into the mulching paper to maintain the pH value close to neutrality, thereby enhancing the activity of microorganisms and corps. To cooperate with the inoculation of microorganisms, metal compound contained in the mulching paper must be controlled lower than a specific value according to the following Table 1 (According to Tappi Test Method T 438cm-96).

**Table 1**

| Compound | Percentage (%) |
|---|---|
| Sodium oxide | 2.17 |
| Magnesium oxide | 3.43 |
| Aluminum oxide | 29.5 |
| Silicon oxide | 41 |
| Sulfur trioxide | 10.4 |
| Calcium oxide | 12.1 |
| Titania | 1.36 |
| Copper | 0.0027 |
| Chromium | 0.00071 |
| Nickel | 0.0033 |
| Iron | 0.06 |
| Manganese | 0.0026 |
| Lead | 0.01 |
| Zinc | 0.0075 |
| Mercury | ND* |
| Arsenic | ND |
| Total chromium | 0.00018 |

| | |
|---|---|
| *ND means that the percentage of the metal compound is unable to be measured. | |

Besides above improvements in papermaking material, papermaking process, quality and function of the mulching paper, the present invention also takes advantage of the mulching paper's light-blocking weed control ability and natural porous carriers to encourage the breed of microorganisms. The mulching paper of the present invention can be coated with microorganisms, natural pest control agent and bacterial control agent for controlling certain major diseases of the plants. The microorganisms are preferably antagonistic to rice sheath blight or radish seeding blight. In addition, the pest control agent can be one of the sodium dodecyl sulfate (SDS), linear alkyl sulfate (LAS), agricultural waste containing saponin, and methyl alcohol extracted from Camellia seed cake,or tobacco dust powder. These microorganisms, pest control agent, and bacterial control agent can be coated on the surface of the multi-purpose mulching paper by an adhesive material such as natural amylum gel or carboxymethyl cellulose (CMC).

Please refer to Fig. 1 which is a schematic view showing the preferred mulching paper of the present invention. As shown in Fig. 1, SDS can be coated or sprayed on the back side of the mulching paper 1 to form a SDS coating 2. In addition, high concentration microorganism chlamydospores or conidia coating containing natural amylum gel and slowly released organic or chemical fertilizer coating 3 can be formed on the upper side opposite to the SDS coating 2. To allow the SDS coating 2 and microorganism chlamydospores or conidia coating remain on the surface of the mulching paper smoothly, the moisture contained in the mulching paper 1 can be overdried to a percentage of 5 (weight percentage to the total weight). Thereafter, high concentration microorganism chlamydospores or conidia containing natural amylum gel (10⁵ per cm³) and 2000 ppm SDS are sprayed on mulching paper (< 70°C) to allow the water to be slightly evaporated and the mulching paper can reverse moisture content to 7̃∼8 % simultaneously. The mulching paper is then fed to a cooling roller for reducing the temperature of the mulching paper to < 50°C, reeled up or cut to form an agricultural mulching paper.

In addition, a plurality of punched holes 4 can be formed in the mulching paper 1 for allowing the seeds to be inlaid therein. Preferably, each of the punched holes 4 slightly pierces through the organic or chemical fertilizer coating 3 and the mulching paper 1, thereby introducing the seeds therein to root downwardly when germination. Thereafter, various seeds can be inlaid in the punched holes 4 and a fixing layer 5 can be covered on the surface of the mulching paper 1 to allow the seeds to root downwardly and have healthy nurse-seed when germination. The fixing layer 5 is preferably a kitchen towel paper or tissue paper having a basic weight ranged from 13 to 35g/m². Preferably, the fixing layer 5 is attached to the surface of the mulching paper 1 by spraying an adhesive material such as starch or carboxymethyl cellulose (CMC). The resulting mulching paper is suitable to be applied in weed control, pest control, fertilizer supply and seeds sowing to form a four-in-one and multi-purpose functional agricultural mulching paper.

According to the properties of the crops and planting method therefor, one can employ one of the alginic soda acid, gelatine and polyvinyl alcohol to cooperate with a chemical agent for protecting the germination of the seeds. Preferably, the chemical agent is selected from a group consisting of ethylene glycol, propylene glycol, butylene glycol, polyethylene glycol, polypropylene glycol, polybutylene glycol, glycerine and 2-octyl glycol.

Certainly, the seeds or embryos artificial seed can be covered by paper pulp, polymer compound or pharmaceutical capsules. Preferably, the seeds are the seeds of cereal, seeds of medicinal herbs, seeds of economical plant, seeds of greensward, seeds of vegetables, seeds of flower, seeds of fruit or artificial seeds cultivated by embryonic callus or cell organization.

Alternatively, the organic or chemical fertilizer coating 3 can be coated on the lower layer of the mulching paper 1 or immerse in the mulching paper 1 according to the requirements of the crops. Certainly, the coatings of the present invention can be arranged in any sequence without being limited by the preferred embodiment of the present invention. After the organic or chemical fertilizer coating, the microorganisms and SDS coating are respectively coated or sprayed on the mulching paper, the mulching paper can be further embossed with a pattern, punched with plural holes, inlaid with plural seeds therein and covered with a fixing layer to form the multi-purpose functional agricultural mulching paper. The step of pattern-embossing can not only steady the variation of paper dimension under the condition of dry and wet alternation but also increase the water-absorbing ability, permeable degree, air permeability and softness of the mulching paper. Therefore, the resulting mulching paper can be used more easily and effectively.

In summary, the multi-purpose functional agricultural mulching paper of the present invention can be applied in weed control, pest control, bacterial control, fertilizer supply and seed sowing to increase the economic benefits. In addition, the agricultural mulching paper of the present invention has the characteristics of being decomposed naturally. After harvest, it can be naturally disintegrated and integrated as part of soil after plowing so that it would not cause any residual deleterious environmental impact as compared to those by traditional plastic film. The multi-purpose agricultural mulching paper of the present invention can be applied in large area field, farm site, home garden, golf field, three-dimensional cultivating box containing organic soil and medium, indoor planting system with light-control and temperature-control apparatus, and organic farming for planting various crops. Certainly, the multi-purpose functional agricultural mulching paper of the present invention can also be reeled up or cut in various modeling for use.

## Claims

1. A method of manufacturing a multi-purpose functional agricultural mulching paper (1), comprising steps of:
(a) providing a papermaking material;
(b) treating the papermaking material to form a cleaned paper pulp;
(c) adding a functional additive into the cleaned paper pulp and treating the cleaned paper pulp to form the multi-purpose functional agricultural mulching paper (1), wherein the functional additive includes one selected from a group consisting of calcium carbonate, Camellia seed cake's powder, extractives of Camellia seed cake powder, derivatives of Camellia seed cake powder, and a combination thereof; and
(d) punching the mulching paper (1) with plural holes and embossing the mulching paper (1) with a pattern, wherein each of the punched holes (4) slightly pierces through the mulching paper (1).

2. The method according to claim 1, **characterized in that**:
the papermaking material is one selected from a group consisting of waste paper fibers, biodegradable plant fibers and polymer fibers; and
the step (b) comprises steps of classifying, pulp-dispersing, coarse pulp-clarifying, fiber-separation, coarse screening, fine pulp-clarifying, fine screening, heat-dispersion, bleaching, pulp-washing and pulp-refinning.

3. The method according to claim 1 or 2, **characterized in that**:
the functional additive further comprises one selected from a group consisting of dry strength agent, wet strength agent, weed control agent, pest control agent and bacterial control agent
;the calcium carbonate is added into the cleaned paper pulp at a dosage based on the classification of the papermaking material, sieving ratio of the fibers, desired water-absorbing ability and air permeability of the mulching paper (1);
the weed control agent is various inorganic or organic filling material selected from a group consisting of black carbon, silicon dioxide and titanium dioxide;
the dry strength agent is one selected from a group consisting of melamine
L formaldehyde resin, polymeric amine-epichlorohydrin resin, phenolic resin, glyoxalated polyacrylamide resin, polyacrylamide resin, raw starch, modified starch, gelatine and various anionic or cationic acidic or neutral dry strength agent; and
the wet strength agent is one selected from a group consisting of melamine formaldehyde resin, polymeric amine-epichlorohydrin resin, phenoic resin, glyoxalated polyacrylamide resin and various anionic or cationic acidic or neutral wet strength agent.

4. The method according to any one of claims 1 to 3, **characterized in that**: the multi-purpose functional agricultural mulching paper (1) has a neutral pH value of about 6, a basic weight ranged from 120 g/m² to 150 g/m² or above, a thickness ranged from 0.2 mm to 0.3 mm, a water-absorbing ability larger than Cobb, 1 Min, 20 gsm, a wet-breaking force in machine direction/cross direction lower than 1.0 kg/m² after two hours immersion, and an air permeability larger than a value of about 50 sec/100 cm³.

5. The method according to any one of claims 1 to 4, **characterized in that** the multi-purpose functional agricultural mulching paper (1) has light-blocking weed control ability, and has natural porous carriers suitable for microorganisms to breed therein, the microorganisms being able to control diseases of plants, wherein the microorganisms, pest control agents, and bacterial control agents can be coated, sprayed or immersed on the porous carriers, wherein preferably
the microorganisms for controlling diseases of the plants are selected from microorganisms antagonistic to rice sheath blight and radish seeding blight, and the pest control agent is preferably selected from a group consisting of sodium dodecyl sulphate (SDS), linear alkyl sulphate (LAS), agricultural waste containing saponin and methyl alcohol extracted from Camellia seed cake or tobacco dust powder; and preferably
the microorganism, the pest control agent and the bacterium control agent can be coated on the surface of the mulching paper (1) by an adhesive material, wherein the adhesive material is one of natural amylum gel and carboxymethyl cellulose (CMC).

6. The method according to any one of claims 1 to 5, **characterized by** further comprising:
a step of coating fertilizer powder or capsules on the mulching paper (1) to form a slowly released organic or chemical fertilizer coating (3), thereby providing required nutrition for plants, wherein
the punched holes (4) are used for inlaying plural seeds therein to allow the plural seeds to root downwardly during germination, and each of the punched holes (4) further slightly pierces through the fertilizer coating (3) or immersing layer.

7. The method according to any one of claims 1 to 6, **characterized by** further comprising a step of attaching a fixing layer (5) on the mulching paper (1) by an adhesive material for securing the plural seeds on the mulching paper (1), and /or a step of treating the plural seeds by a chemical agent cooperating with one selected from a group consisting of algin soda acid, gelatine and polyvinyl alcohol for protecting the germination of seeds, wherein:
the adhesive material is one of natural amylum gel and carboxymethyl cellulose (CMC);
the chemical agent is selected from a group consisting of ethylene glycol, propylene glycol, butylene glycol, polyethylene glycol, polypropylene glycol, polybutylene glycol, glycerine and 2-octyl glycol;
the plural seeds are selected from a group consisting of seeds covered by paper pulp, seeds covered by polymer compound, seeds of cereal, seeds of medicinal herbs, seeds of economical plant, seeds of greensward, seeds of vegetables, seeds of flower, seeds of fruit, seeds of forestry tree and artificial seeds cultivated by embryonic callus or cell organization;
the multi-purpose functional agricultural mulching paper (1) can be embossed with the pattern and punched with the plural holes entirely to increase the water-absorbing ability, air permeability and softness thereof and steady variation in paper dimension under the condition of dry and wet alternation; and/or
the functional additive can be selectively added into the cleaned paper pulp according to the requirements of the plants.

8. A multi-purpose agricultural mulching paper (1) comprising a functional additive and having a neutral pH value and a punched hole (4) slightly piercing through the mulching paper (1) to allow a seed to root downwardly when germination, wherein the functional additive includes one selected from a group consisting of calcium carbonate, Camellia seed cake's powder, extractives of Camellia seed cake powder, derivatives of Camellia seed cake powder, and a combination thereof.

9. The mulching paper (1) according to claim 8, **characterized in that**:
the functional additive further comprises one selected from a group consisting of pest control agent, bacterial agent, weed control agent, dry strength agent and wet strength agent;
the calcium carbonate is added into the mulching paper (1) with a dosage based on the classification of the papermaking material, sieving ratio of the fibers, desired water-absorbing ability and air permeability of the mulching paper (1);
the weed control agent is various inorganic or organic filling material selected from a group consisting of black carbon, silicon dioxide and titanium dioxide;
the dry strength agent is one selected from a group consisting of melamine formaldehyde resin, polymeric amine-epichlorohydrin resin, phenoic resin, glyoxalated polyacrylamide resin, polyacrylamide resin, raw starch, modified starch, gelatine and various anionic or cationic acidic or neutral dry strength agent; and/or
the wet strength agent is one selected from a group consisting of melamine formaldehyde resin, polymeric amine-epichlorhydrin resin, phenoic resin, glyoxalated polyacrylamide resin and various anionic or cationic acidic or neutral wet strength agent.

10. The mulching paper (1) according to claim 8 or 9, **characterized in that** the mulching paper (1) has a basis weight ranged from 120 g/m² to 150 g/m² or above, a thickness ranged from 0.2 mm to 0.3 mm, a water-absorbing ability larger than Cobb, 1Min, 20 gsm, an air permeability larger than a value of above 50 sec/100 cm³, and a wet-breaking force in machine direction/cross direction lower than 1.0 kg/m² after two hours immersion.

11. The mulching paper (1) according to any one of claims 8 to 10, **characterized in that**:
the multi-purpose functional agricultural mulching paper (1) has light-blocking weed control ability, and has natural porous carriers suitable for microorganisms to breed therein, the microorganisms being able to control diseases of the plants, wherein the microorganisms, pest control agent and bacterial control agents can be coated, sprayed or impregnated on the porous carriers, wherein preferably
the microorganisms for controlling diseases of the plants are selected from microorganisms antagonistic to rice sheath blight and radish seeding blight; the pest control agent is preferably selected from a group consisting of sodium dodecyl sulfate (SDS), linear alkyl sulfate (LAS), agricultural waste containing saponin and methyl alcohol extracted from Camellia seed cake powder or tobacco dust powder;
the microorganisms, the pest control agent and the bacterial control agent can be coated, sprayed or impregnated on the surface of the mulching paper (1) by an adhering material;
the adhesive material is one of natural amylum gel and carboxymethyl cellulose (CMC);
the mulching paper (1) further comprises a slowly released organic or chemical fertilizer coating (3), spraying, impregnating or granulating for providing required nutrition to plants and the punched holes (4) for allowing_the seed to be inlaid therein; and/or
the punched hole further slightly pierces through the fertilizer coating (3) layer, wherein:
the mulching paper (1) further comprises a fixing layer (5) attached on the surface thereof for fixing the seeds therein;
the fixing layer (5) is attached on the surface by an adhesive material selected from a group consisting of spray glue, amylum and carboxymethyl cellulose (CMC);
the seed is treated by a chemical agent cooperating with one selected from a group consisting of algin soda acid, gelatine and polyvinyl alcohol for protecting the germination of seeds; and/or
the chemical agent is selected from a group consisting of ethylene glycol, propylene glycol, butylene glycol, polyethylene glycol, polypropylene glycol, polybutylene glycol, glycerine and 2-octyl glycol.

12. The mulching paper (1) according to any one of claims 8 to 11, **characterized in that**:
the seeds are selected from a group consisting of seeds covered by paper pulp, seeds covered by polymer compound, seeds of cereal, seeds of medicinal herbs, seeds of economical plant, seeds of greensward, seeds of vegetables, seeds of flower, seeds of fruit, seeds of forestry tree and artificial seeds cultivated by embryonic callus or cell organization.

## Patentansprüche

1. Verfahren zum Herstellen eines funktionalen Mehrzweck-Mulchpapiers (1) für die Landwirtschaft, umfassend die Schritte:
- (a) Bereitstellen eines Materials für die Papierherstellung;
- (b) Behandeln des Materials für die Papierherstellung, um eine gereinigte Papierpulpe zu bilden;
- (c) Zugeben eines funktionalen Additivs zu der gereinigten Papierpulpe und Behandeln der gereinigten Papierpulpe, um das funktionale Mehrzweck-Mulchpapier (1) für die Landwirtschaft zu bilden, wobei das funktionale Additiv eines enthält, das ausgewählt ist aus einer Gruppe, bestehend aus Calciumcarbonat, Kameliensamenkuchenpulver, Extrakten von Kameliensamenkuchenpulver, Derivaten von Kameliensamenkuchenpulver und einer Kombination derselben; und
- (d) Stanzen des Mulchpapiers (1) mit mehreren Löchern und Prägen des Mulchpapiers (1) mit einem Muster, wobei jedes der gestanzten Löcher (4) das Mulchpapier (1) etwas durchdringt.

2. Verfahren nach Anspruch 1, **dadurch gekennzeichnet, dass**:
das Material für die Papierherstellung eines ist, das ausgewählt ist aus einer Gruppe, bestehend Altpapierfasern, biologisch abbaubaren Pflanzenfasern und Polymerfasern; und
der Schritt (b) Schritte des Sortierens, des Dispergierens der Pulpe, des Klärens der groben Pulpe, des Auftrennens der Fasern, des Grobsiebens, des Klärens der feinen Pulpe, des Feinsiebens, des Dispergierens unter Wärme, des Bleichens, des Waschens der Pulpe und des Aufbereitens oder Veredelns der Pulpe umfasst.

3. Verfahren nach Anspruch 1 oder 2, **dadurch gekennzeichnet, dass**:
das funktionale Additiv ferner eines enthält, das ausgewählt ist aus einer Gruppe, bestehend aus einem Trockenverfestigungsmittel, einem Nassverfestigungsmittel, einem Unkrautbekämpfungsmittel, einem Schädlingsbekämpfungsmittel und einem Bakterienbekämpfungsmittel;
das Calciumcarbonat in einer auf der Sortierung des Materials für die Papierherstellung, dem Siebungsverhältnis der Fasern, dem gewünschten Wasserabsorptionsvermögen und der Luftdurchlässigkeit des Mulchpapiers (1) basierten Dosierung zu der gereinigten Papierpulpe gegeben wird;
das Unkrautbekämpfungsmittel ein diverses anorganisches oder organisches Füllmaterial ist, das ausgewählt ist aus einer Gruppe, bestehend aus Ruß, Siliziumdioxid und Titandioxid;
das Trockenverfestigungsmittel eines ist, das ausgewählt ist aus einer Gruppe, bestehend aus Melaminformaldehydharz, Polyamin-Epichlorhydrinharz, Phenolharz, glyoxaliertem Polyacrylamidharz, Polyacrylamidharz, Rohstärke, modifizierter Stärke, Gelatine und verschiedenen anionischen oder kationischen sauren oder neutralen Trockenverfestigungsmitteln; und
das Nassverfestigungsmittel eines ist, das ausgewählt ist aus einer Gruppe, bestehend aus Melaminformaldehydharz, Polyamin-Epichlorhydrin-Harz, Phenolharz, glyoxaliertem Polyacrylamidharz und verschiedenen anionischen oder kationischen sauren oder neutralen Nassverfestigungsmitteln.

4. Verfahren nach einem der Ansprüche 1 bis 3, **dadurch gekennzeichnet, dass**: das funktionale Mehrzweck-Mulchpapier (1) für die Landwirtschaft einen neutralen pH-Wert von etwa 6, ein Grundgewicht von 120 g/m² bis 150 g/m² oder mehr, eine Dicke von 0,2 mm bis 0,3 mm, ein Wasserabsorptionsvermögen von mehr als Cobb, 1 Min, 20 gsm, eine Nassreißfestigkeit in Maschinenrichtung/Querrichtung von weniger als 1,0 kg/m² nach zweistündigem Tränken und eine Luftdurchlässigkeit von mehr als etwa 50 s/100 cm³ aufweist.

5. Verfahren nach einem der Ansprüche 1 bis 4, **dadurch gekennzeichnet, dass** das funktionale Mehrzweck-Mulchpapier (1) für die Landwirtschaft ein Vermögen zur Unkrautbekämpfung durch Lichtblockierung besitzt und natürliche poröse Trägermaterialien aufweist, die zum Anzüchten von Mikroorganismen geeignet sind, wobei die Mikroorganismen dazu in der Lage sind, Pflanzenkrankheiten zu bekämpfen und wobei die Mikroorganismen, die Schädlingsbekämpfungsmittel und die Bakterienbekämpfungsmittel auf die porösen Trägermaterialien aufgetragen, aufgesprüht oder aufgetränkt werden können, wobei vorzugsweise die Mikroorganismen zum Bekämpfen von Pflanzenkrankheiten ausgewählt sind aus Mikroorganismen, die als Antagonist gegen Mehltau auf Reishülsen und auf Radieschensamen wirken, und das Schädlingsbekämpfungsmittel bevorzugt ausgewählt ist aus einer Gruppe, bestehend aus Natriumdodecylsulfat (SDS), linearem Alkylsulfat (LAS), landwirtschaftlichem Abfall, der Saponin und Methylalkohol enthält, der aus Kameliensamen oder Tabakstaub extrahiert wurde; und vorzugsweise der Mikroorganismus, das Schädlingsbekämpfungsmittel und das Bakterienbekämpfungsmittel mit Hilfe eines adhäsiven Materials auf die Oberfläche des Mulchpapiers (1) aufgetragen werden können, wobei das adhäsive Material Stärkegel oder Carboxymethylcellulose (CMC) ist.

6. Verfahren nach einem der Ansprüche 1 bis 5, **dadurch gekennzeichnet, dass** es ferner umfasst:
einen Schritt des Auftragens von Düngemittelpulver oder -kapseln auf das Mulchpapier (1), um eine langsam freigesetzte Beschichtung (3) aus organischem oder chemischem Düngemittel zu bilden, so dass die erforderlichen Nährstoffe für die Pflanzen bereitgestellt werden, wobei
die gestanzten Löcher (4) zum Einlegen mehrerer Samen darin verwendet werden, um eine Wurzelbildung der mehreren Samen nach unten während der Keimung zu erlauben, und wobei jedes der gestanzten Löcher (4) ferner die Düngemittelbeschichtung (3) oder die aufgetränkte Schicht etwas durchdringt.

7. Verfahren nach einem der Ansprüche 1 bis 6, **dadurch gekennzeichnet, dass** es ferner einen Schritt des Anbringens einer fixierenden Schicht (5) auf dem Mulchpapier (1) mit Hilfe eines adhäsiven Materials, um die mehreren Samen auf dem Mulchpapier (1) zu fixieren, und/oder einen Schritt des Behandelns der mehreren Samen mit einer chemischen Substanz, die mit einer Substanz zusammenwirkt, die ausgewählt ist aus einer Gruppe, bestehend aus Alginnatronsäure, Gelatine und Polyvinylalkohol, um die Keimung der Samen zu schützen, umfasst, wobei:
das adhäsive Material natürliches Stärkegel oder Carboxymethylcellulose (CMC) ist;
die chemische Substanz ausgewählt ist aus einer Gruppe, bestehend aus Ethylenglykol, Propylenglykol, Butylenglykol, Polyethylenglykol, Polypropylenglykol, Polybutylenglykol, Glyzerin und 2-Octylglykol;
die mehreren Samen ausgewählt sind aus einer Gruppe, bestehend aus Samen, die mit Papierpulpe bedeckt sind, Samen, die mit einer Polymerverbindung bedeckt sind, Getreidesamen, Samen von Heilkräutern, Samen von Nutzpflanzen, Rasensamen, Gemüsesamen, Blumensamen, Samen von Früchten, Samen von Waldbäumen und künstlichen Samen, die aus dem Embryocallus oder durch Zellorganisation kultiviert wurden;
das funktionale Mehrzweck-Mulchpapier (1) für die Landwirtschaft mit dem Muster geprägt und vollständig mit mehreren Löchern gestanzt werden kann, um das Wasserabsorptionsvermögen, die Luftdurchlässigkeit und die Weichheit desselben und die beständige Variabilität der Abmessungen des Papiers sowohl in Trocken- als auch Nassperioden zu erhöhen; und/oder
das funktionale Additiv entsprechend der Anforderungen der Pflanzen selektiv zur gereinigten Papierpulpe gegeben werden kann.

8. Mehrzweck-Mulchpapier (1) für die Landwirtschaft, das ein funktionales Additiv enthält und einen neutralen pH-Wert und ein gestanztes Loch (4), das das Mulchpapier (1) etwas durchdringt, um eine Wurzelbildung eines Samens nach unten während der Keimung zu erlauben, aufweist, wobei das funktionale Additiv eines enthält, das ausgewählt ist aus einer Gruppe, bestehend aus Calciumcarbonat, Kameliensamenkuchenpulver, Extrakten von Kameliensamenkuchenpulver, Derivaten von Kameliensamenkuchenpulver und einer Kombination derselben.

9. Mulchpapier (1) nach Anspruch 8, **dadurch gekennzeichnet, dass**:
das funktionale Additiv ferner eines enthält, das ausgewählt ist aus einer Gruppe, bestehend aus einem Unkrautbekämpfungsmittel, einem Bakterienbekämpfungsmittel, einem Schädlingsbekämpfungsmittel, einem Trockenverfestigungsmittel und einem Nassverfestigungsmittel;
das Calciumcarbonat in einer auf der Sortierung des Materials für die Papierherstellung, dem Siebungsverhältnis der Fasern, dem gewünschten Wasserabsorptionsvermögen und der Luftdurchlässigkeit des Mulchpapiers (1) basierten Dosierung zu dem Mulchpapier (1) gegeben wurde;
das Unkrautbekämpfungsmittel ein diverses anorganisches oder organisches Füllmaterial ist, das ausgewählt ist aus einer Gruppe, bestehend aus Ruß, Siliziumdioxid und Titandioxid;
das Trockenverfestigungsmittel eines ist, das ausgewählt ist aus einer Gruppe, bestehend aus Melaminformaldehydharz, Polyamin-Epichlorhydrinharz, Phenolharz, glyoxaliertem Polyacrylamidharz, Polyacrylamidharz, Rohstärke, modifizierter Stärke, Gelatine und verschiedenen anionischen oder kationischen sauren oder neutralen Trockenverfestigungsmitteln; und/oder
das Nassverfestigungsmittel eines ist, das ausgewählt ist aus einer Gruppe, bestehend aus Melaminformaldehydharz, Polyamin-Epichlorhydrin-Harz, Phenolharz, glyoxaliertem Polyacrylamidharz und verschiedenen anionischen oder kationischen sauren oder neutralen Nassverfestigungsmitteln.

10. Mulchpapier (1) nach Anspruch 8 oder 9, **dadurch gekennzeichnet, dass** das Mulchpapier (1) ein Grundgewicht von 120 g/m² bis 150 g/m² oder mehr, eine Dicke von 0,2 mm bis 0,3 mm, ein Wasserabsorptionsvermögen von mehr als Cobb, 1 Min, 20 gsm, eine Luftdurchlässigkeit von mehr als 50 s/100 cm³, eine Nassreißfestigkeit in Maschinenrichtung/Querrichtung von weniger als 1,0 kg/m² nach zweistündigem Tränken aufweist.

11. Mulchpapier (1) nach einem der Ansprüche 8 bis 10, **dadurch gekennzeichnet, dass**:
das funktionale Mehrzweck-Mulchpapier (1) für die Landwirtschaft ein Vermögen zur Unkrautbekämpfung durch Lichtblockierung besitzt und natürliche poröse Trägermaterialien aufweist, die zum Anzüchten von Mikroorganismen geeignet sind,
wobei die Mikroorganismen dazu in der Lage sind, Pflanzenkrankheiten zu bekämpfen und wobei die Mikroorganismen, die Schädlingsbekämpfungsmittel und die Bakterienbekämpfungsmittel auf die porösen Trägermaterialien aufgetragen,
aufgesprüht oder aufimprägniert werden können, wobei vorzugsweise die Mikroorganismen zum Bekämpfen von Pflanzenkrankheiten ausgewählt sind aus Mikroorganismen, die als Antagonist gegen Mehltau auf Reishülsen und auf Radieschensamen wirken; das Schädlingsbekämpfungsmittel bevorzugt ausgewählt ist aus einer Gruppe, bestehend aus Natriumdodecylsulfat (SDS), linearem Alkylsulfat (LAS), landwirtschaftlichem Abfall, der Saponin und Methylalkohol enthält, der aus Kameliensamen oder Tabakstaub extrahiert wurde;
die Mikroorganismen, das Schädlingsbekämpfungsmittel und das Bakterienbekämpfungsmittel mit Hilfe eines haftenden Materials auf die Oberfläche des Mulchpapiers (1) aufgetragen, aufgesprüht oder aufimprägniert werden können;
das adhäsive Material Stärkegel oder Carboxymethylcellulose (CMC) ist;
das Mulchpapier (1) ferner eine langsam freigesetzte, aufgetragene, aufgesprühte, aufimprägnierte Schicht oder ein Granulat aus organischem oder chemischen Düngemittel (3), so dass die erforderlichen Nährstoffe für die Pflanzen bereitgestellt werden, und die gestanzten Löcher (4), um ein Einlegen der Samen darin zu erlauben, aufweist; und/oder
das gestanzte Loch ferner die Schicht (3) der Düngemittelbeschichtung etwas durchdringt, wobei:
das Mulchpapier (1) ferner eine fixierende Schicht (5) aufweist, die auf die Oberfläche des Mulchpapiers (1) aufgebracht ist, um die Samen daran zu fixieren;
die fixierende Schicht (5) mit Hilfe eines adhäsiven Materials, das ausgewählt ist aus einer Gruppe, bestehend aus Sprühkleber, Stärke und Carboxymethylcellulose (CMC), an der Oberfläche angebracht ist;
die Samen mit einer chemischen Substanz behandelt wurden, die mit einer Substanz zusammenwirkt, die ausgewählt ist aus einer Gruppe, bestehend aus Alginnatronsäure, Gelatine und Polyvinylalkohol, um die Keimung der Samen zu schützen; und/oder
die chemische Substanz ausgewählt aus einer Gruppe, bestehend aus Ethylenglykol, Propylenglykol, Butylenglykol, Polyethylenglykol, Polypropylenglykol, Polybutylenglykol, Glyzerin und 2-Octylglykol.

12. Mulchpapier (1) nach einem der Ansprüche 8 bis 11, **dadurch gekennzeichnet, dass**:
die Samen ausgewählt sind aus einer Gruppe, bestehend aus Samen, die mit Papierpulpe bedeckt sind, Samen, die mit einer Polymerverbindung bedeckt sind, Getreidesamen, Samen von Heilkräutern, Samen von Nutzpflanzen, Rasensamen, Gemüsesamen, Blumensamen, Samen von Früchten, Samen von Waldbäumen und künstlichen Samen, die durch embryonale Callus- oder Zellorganisation gezüchtet wurden.

## Revendications

1. Procédé de fabrication d'un papier pour paillis agricole fonctionnel polyvalent (1), comprenant les étapes de :
(a) fourniture d'une matière de fabrication de papier ;
(b) traitement de la matière de fabrication de papier pour former une pâte à papier nettoyée ;
(c) ajout d'un additif fonctionnel dans la pâte à papier nettoyée et traitement de la pâte à papier nettoyée pour former le papier pour paillis agricole fonctionnel polyvalent (1), dans lequel l'additif fonctionnel inclut celui sélectionné à partir d'un groupe constitué par le carbonate de calcium, la poudre de pain de graines de Camélia, des extraits de poudre de pain de graines de Camélia, des dérivés de poudre de pain de graines de Camélia, et une combinaison de ceux-ci ; et
(d) perforation du papier pour paillis (1) par plusieurs trous et estampage du papier pour paillis (1) avec un motif, dans lequel chacun des trous perforés (4) perce légèrement à travers le papier pour paillis (1).

2. Procédé selon la revendication 1, **caractérisé en ce que** :
la matière de fabrication de papier est celle sélectionnée à partir d'un groupe constitué par des fibres de vieux papiers, des fibres végétales biodégradables et des fibres de polymère ; et
l'étape (b) comprend des étapes de classification, de dispersion de pâte, de clarification de pâte grossière, de séparation de fibres, de criblage grossier, de clarification de pâte fine, de criblage fin, de dispersion de chaleur, de blanchiment, de lavage de pâte, et de raffinage de pâte.

3. Procédé selon la revendication 1 ou 2, **caractérisé en ce que** :
l'additif fonctionnel comprend en outre celui sélectionné à partir d'un groupe constitué par un agent de résistance en milieu sec, d'un agent de résistance en milieu humide,
d'un agent de lutte contre les mauvaises herbes, d'un agent de lutte contre les parasites et d'un agent de lutte contre les bactéries ;
le carbonate de calcium est ajouté dans la pâte à papier nettoyée à un dosage basé sur la classification de la matière de fabrication de papier, le débit de tamisage des fibres,
la capacité d'absorption d'eau souhaitée et la perméabilité à l'air du papier pour paillis (1) ;
l'agent de lutte contre les mauvaises herbes est une matière de remplissage inorganique ou organique diverse sélectionnée à partir d'un groupe constitué par le noir de carbone,
le dioxyde de silicium et le dioxyde de titane ;
l'agent de résistance en milieu sec est celui sélectionné à partir d'un groupe constitué par la résine mélamine-formaldéhyde, la résine épichlorhydrine-amine polymère, la résine phénolique, la résine polyacrylamide glyoxalée, la résine polyacrylamide,
l'amidon brut, l'amidon modifié, la gélatine et un agent de résistance en milieu sec acide ou neutre anionique ou cationique divers ; et
l'agent de résistance en milieu humide est celui sélectionné à partir d'un groupe constitué par la résine mélamine-formaldéhyde, la résine épichlorhydrine-amine polymère, la résine phénolique, la résine polyacrylamide glyoxalée et un agent de résistance en milieu humide acide ou neutre anionique ou cationique divers.

4. Procédé selon l'une quelconque des revendications 1 à 3, **caractérisé en ce que** : le papier pour paillis agricole fonctionnel polyvalent (1) a une valeur de pH neutre d'environ 6, un poids unitaire allant de 120 g/m² à 150 g/m² ou plus, une épaisseur allant de 0,2 mm à 0,3 mm, une capacité d'absorption d'eau supérieure à Cobb, 1 Min, 20 gsm, une force de rupture en milieu humide dans le sens machine / sens travers inférieure à 1,0 kg/m² après deux heures d'immersion, et une perméabilité à l'air supérieure à une valeur d'environ 50 s/100cm³.

5. Procédé selon l'une quelconque des revendications 1 à 4, **caractérisé en ce que** le papier pour paillis agricole fonctionnel polyvalent (1) a une capacité de lutte contre les mauvaises herbes par blocage de lumière, et a des porteurs poreux naturels appropriés pour la multiplication de micro-organismes en son sein, les micro-organismes étant capables de lutter contre les maladies des plantes, dans lequel les micro-organismes, les agents de lutte contre les parasites et les agents de lutte contre les bactéries peuvent être revêtus, pulvérisés ou immergés sur les porteurs poreux, dans lesquels de préférence
les micro-organismes pour lutter contre les maladies des plantes sont sélectionnés à partir de micro-organismes antagoniques de la brûlure pellicularienne du riz et de la fusariose vasculaire du radis, et l'agent de lutte contre les parasites est de préférence sélectionné à partir d'un groupe constitué par le dodécylsulfate de sodium (SDS), le sulfate d'alkyle linéaire (LAS), les déchets agricoles contenant de la saponine et l'alcool méthylique extrait de la poudre de pain de graines de Camélia ou de poussière de tabac ; et de préférence
le micro-organisme, l'agent de lutte contre les parasites et l'agent de lutte contre les bactéries peuvent être revêtus sur la surface du papier pour paillis (1) par une matière adhésive, dans laquelle la matière adhésive est l'une d'un gel d'amidon naturel et de carboxyméthylcellulose (CMC).

6. Procédé selon l'une quelconque des revendications 1 à 5, **caractérisé** comme comprenant en outre :
une étape de revêtement de poudre ou de capsules d'engrais sur le papier pour paillis (1) pour former un revêtement d'engrais organique ou chimique à libération lente (3), fournissant de ce fait la nutrition nécessaire pour des plantes, dans lequel
les trous perforés (4) sont utilisés pour incruster plusieurs graines en leur sein pour permettre aux plusieurs graines de s'enraciner vers le bas pendant la germination, et
chacun des trous perforés (4) perce en outre légèrement à travers le revêtement d'engrais (3) ou la couche d'immersion.

7. Procédé selon l'une quelconque des revendications 1 à 6, **caractérisé** comme comprenant en outre une étape d'attachement d'une couche de fixation (5) sur le papier pour paillis (1) par une matière adhésive pour solidement fixer les plusieurs graines sur le papier pour paillis (1), et/ou une étape de traitement des plusieurs graines par un agent chimique coopérant avec un élément sélectionné à partir d'un groupe constitué par le bicarbonate-acide alginique, la gélatine et l'alcool de polyvinyle pour protéger la germination des graines, dans lequel :
la matière adhésive est l'une d'un gel d'amidon naturel et de carboxyméthylcellulose (CMC) ;
l'agent chimique est sélectionné à partir d'un groupe constitué par l'éthylène glycol, le propylène glycol, le butylène glycol, le polyéthylène glycol, le polypropylène glycol, le polybutylène glycol, la glycérine et le 2-octyle glycol ;
les plusieurs graines sont sélectionnées à partir d'un groupe constitué par des graines recouvertes par de la pâte à papier, des graines recouvertes par un composé polymère,
des graines de céréales, des graines d'herbes médicinales, des graines de plantes économiques, des graines de pelouse, des graines de légumes, des graines de fleurs,
des graines de fruits, des graines d'arbre de sylviculture et des graines artificielles cultivées par dureté embryonnaire ou organisation cellulaire ;
le papier pour paillis agricole fonctionnel polyvalent (1) peut être estampé avec le motif et perforé par les plusieurs trous entièrement pour augmenter la capacité d'absorption d'eau, la perméabilité à l'air et sa douceur et la variation stable des dimensions du papier sous l'alternance d'états sec et humide ; et/ou l'additif fonctionnel peut être ajouté de manière sélective dans la pâte à papier nettoyée selon les exigences des plantes.

8. Papier pour paillis agricole polyvalent (1) comprenant un additif fonctionnel et ayant une valeur de pH neutre et un trou perforé (4) perçant légèrement à travers le papier pour paillis (1) pour permettre à une graine de s'enraciner vers le bas lors de la germination, dans lequel l'additif fonctionnel inclut celui sélectionné à partir d'un groupe constitué par le carbonate de calcium, la poudre de pain de graines de Camélia, les extraits de poudre de pain de graines de Camélia, les dérivés de poudre de pain de graines de Camélia et une combinaison de ceux-ci.

9. Papier pour paillis (1) selon la revendication 8, **caractérisé en ce que** :
l'additif fonctionnel comprend en outre celui sélectionné à partir d'un groupe constitué par un agent de lutte contre les parasites, un agent bactérien, un agent de lutte contre les mauvaises herbes, un agent de résistance en milieu sec et un agent de résistance en milieu humide ;
le carbonate de calcium est ajouté dans le papier pour paillis (1) avec un dosage basé sur la classification de la matière de fabrication de papier, le débit de tamisage des fibres, la capacité d'absorption d'eau souhaitée et la perméabilité à l'air du papier pour paillis (1) ;
l'agent de lutte contre les mauvaises herbes est une matière de remplissage inorganique ou organique diverse sélectionnée à partir d'un groupe constitué par le noir de carbone, le dioxyde de silicium et le dioxyde de titane ;
l'agent de résistance en milieu sec est celui sélectionné à partir d'un groupe constitué par la résine mélamine-formaldéhyde, la résine épichlorhydrine-amine polymère, la résine phénolique, la résine polyacrylamide glyoxalée, la résine polyacrylamide,
l'amidon brut, l'amidon modifié, la gélatine et un agent de résistance en milieu sec acide ou neutre anionique ou cationique divers ; et/ou
l'agent de résistance en milieu humide est celui sélectionné à partir d'un groupe constitué par la résine mélamine-formaldéhyde, la résine épichlorhydrine-amine polymère, la résine phénolique, la résine polyacrylamide glyoxalée et un agent de résistance en milieu humide acide ou neutre anionique ou cationique divers.

10. Papier pour paillis (1) selon la revendication 8 ou 9, **caractérisé en ce que** le papier pour paillis (1) a un poids unitaire allant de 120 g/m² à 150 g/m² ou plus, une épaisseur allant de 0,2 mm à 0,3 mm, une capacité d'absorption d'eau supérieure à Cobb, 1 Min, 20 gsm, une perméabilité à l'air supérieure à une valeur d'environ 50 s/100cm³, et une force de rupture en milieu humide dans le sens machine / sens travers inférieure à 1,0 kg/m² après deux heures d'immersion.

11. Papier pour paillis (1) selon l'une quelconque des revendications 8 à 10, **caractérisé en ce que** :
le papier pour paillis agricole fonctionnel polyvalent (1) a une capacité de lutte contre les mauvaises herbes par blocage de lumière, et a des porteurs poreux naturels appropriés pour la multiplication de micro-organismes en leur sein, les micro-organismes étant capables de lutter contre les maladies des plantes, dans lequel les micro-organismes, les agents de lutte contre les parasites et les agents de lutte contre les bactéries peuvent être revêtus, pulvérisés ou imprégnés sur les porteurs poreux,
dans lesquels de préférence
les micro-organismes pour lutter contre les maladies des plantes sont sélectionnés à partir de micro-organismes antagoniques de la brûlure pellicularienne du riz et de la fusariose vasculaire du radis ; l'agent de lutte contre les parasites est de préférence sélectionné à partir d'un groupe constitué par le dodécylsulfate de sodium (SDS), le sulfate d'alkyle linéaire (LAS), les déchets agricoles contenant de la saponine et
l'alcool méthylique extrait de la poudre de pain de graines de Camélia ou de poussière de tabac ;
les micro-organismes, l'agent de lutte contre les parasites et l'agent de lutte contre les bactéries peuvent être revêtus, pulvérisés ou imprégnés sur la surface du papier pour paillis (1) par une matière adhésive ;
la matière adhésive est l'une d'un gel d'amidon naturel et de carboxyméthylcellulose (CMC) ;
le papier pour paillis (1) comprend en outre un revêtement d'engrais organique ou chimique à libération lente (3), par pulvérisation, imprégnation ou granulation pour fournir la nutrition nécessaire aux plantes, et les trous perforés (4) pour permettre à la graine d'être incrustée en son sein ; et/ou
le trou perforé perce en outre légèrement à travers la couche de revêtement d'engrais (3), dans lequel :
le papier pour paillis (1) comprend en outre une couche de fixation (5) attachée sur la surface de ce dernier pour fixer les graines en son sein ;
la couche de fixation (5) est attachée sur la surface par une matière adhésive sélectionnée à partir d'un groupe constitué par une colle à pulvériser, l'amidon et la carboxyméthylcellulose (CMC) ;
la graine est traitée par un agent chimique coopérant avec un élément sélectionné à partir d'un groupe constitué par le bicarbonate-acide alginique, la gélatine et l'alcool de polyvinyle pour protéger la germination des graines ; et/ou
l'agent chimique est sélectionné à partir d'un groupe constitué par l'éthylène glycol, le propylène glycol, le butylène glycol, le polyéthylène glycol, le polypropylène glycol, le polybutylène glycol, la glycérine et le 2-octyle glycol.

12. Papier pour paillis (1) selon l'une quelconque des revendications 8 à 11, **caractérisé en ce que** :
les graines sont sélectionnées à partir d'un groupe constitué par des graines recouvertes par de la pâte à papier, des graines recouvertes par un composé polymère, des graines de céréales, des graines d'herbes médicinales, des graines de plantes économiques, des graines de pelouse, des graines de légumes, des graines de fleurs, des graines de fruits, des graines d'arbre de sylviculture et des graines artificielles cultivées par dureté embryonnaire ou organisation cellulaire.
